# EUROPEAN PATENT APPLICATION

(11) **EP 0 926 849 A2**
(43) Date of publication of application: **30.06.1999**
(21) Application number: 98310253.4
(22) Date of filing: 15.12.1998
(51) Int. Cl.: H04B 10/17

(54) **Optical amplifier for wavelength division multiplexing transmission**

(30) Priority: 25.12.1997 JP 35771397
(71) Applicant: NEC CORPORATION, Tokyo (JP)
(72) Inventor: Tanaka, Hiroaki, Minato-ku, Tokyo (JP)
(74) Representative: Orchard, Oliver John

(57) **Abstract**

A WDM transmission optical amplifier includes a first amplifier which amplifies input light in a first amplifying range, a second amplifier which amplifies the output from first amplifier in a second amplifying range different from the first amplifying range, means which branches the output from the second amplifier into two beams providing an external output Pout and a feedback signal respectively, and a power control circuit for the amplified light which controls the light power in the first and the second amplifiers.

## Description

The present invention relates to an optical amplifier which is suitable for wavelength division multiplexing (WDM) transmission.

Recently, there has been an increasing demand for equipment for wavelength division multiplexing (WDM) transmission which is capable of large capacity transmission in the field of optical transmission.

In WDM transmission, a plurality of light sources, whose wavelengths are slightly different from each other, are modulated by independent transmission signals and are transmitted all together in a single optical fibre.

Therefore, WDM transmission employs an optical amplifier for amplifying light signals in a plurality of signal channels without converting them to electrical signals, and with a processing unit, such as an arrayed wave-guide grating (AWG), for multiplexing and demultiplexing each signal channel wavelength.

An erbium doped fibre amplifier (EDFA) which uses an optical fibre doped with erbium is one example of a previously proposed optical amplifier.

However, the previously proposed device for WDM transmission has the disadvantage in that the systematic design of the optical amplifiers is required on the basis of the number of channels and the light signal level, because the number of wavelength channels for signals and the number of light signal levels are different depending upon the location.

Further, the previously proposed optical amplifier for WDM transmission is difficult and expensive with regard to design and manufacturing, and is not suitable for general use, even though its gain is made flat by the use of a gain equalizer, such as a fibre grating, because an optical amplifier with broad bandwidth is required in order to bundle together signals having a plurality of wavelengths.

Features of a WDM transmission amplifier to be described below, by way of example, in illustration of the present invention are that it can be designed comparatively easily and is suitable for general use.

A particular optical amplifier for WDM transmission which amplifies input signal light to be described below by way of example in illustration of the present invention includes a first amplifier for amplifying input signal light in a prescribed wave-length range, and a second, amplifier for amplifying the output from the first amplifier in a wave-length range different from that of the first amplifier.

The amplifying ranges of the first and second amplifiers are arranged with respect to each other such that signal light in the prescribed range is amplified.

The optical amplifier to be described, as an example, also includes means for branching the output light from the second amplifier into two beams, and means for controlling the light power in the first and second amplifiers on the basis of the power of the signal light output from the branching means.

An optical amplifier for WDM transmission which amplifies the input signal light, and which includes a cascade connection of a plurality of amplifiers with different amplifying ranges will also be described, by way of example, in illustrating the invention.

The amplifying range of each cascaded amplifier is arranged with respect to the others in order to amplify signal light in a prescribed range.

There will now be described an optical amplifier having a cascade connection of a plurality of amplifiers, means for branching the output from the final stage of the cascade connection into two beams, and a control means for controlling the light power in each of the amplifiers on the basis of the power of the signal light output from the branching means.

It is not necessary to redesign such optical amplifiers, even when the number of channels of the signal light is increased or decreased, because the optical amplifier includes a cascade connection of a plurality of amplifiers, each with a different amplifying range, whereby amplification in the prescribed amplifying range is implemented.

Further, the output power of the amplified signal light is stabilized, even when the power of the input signal light fluctuates due to several factors such as the degradation of laser sources, because the optical amplifier has a cascade connection of a plurality of amplifiers, means for branching the light output from final stage of the cascade connection into two beams, and means for controlling the light power in each amplifier on the basis of the power of the signal light output from the branching means.

The following description and drawings disclose, by means of examples, the invention which is characterised in the appended claims, whose terms determine the extent of the protection conferred hereby.

In the drawings:-
Figure 1 is a block schematic diagram of an optical amplifier for WDM,
Figure 2 is a graph showing the amplification range of the EDFA shown in Figure 1.
Figure 3 is a graph showing the relation between amplification gain and wavelength for the output light output from a coupler (CPL), as shown in Figure 1.
Figure 4 is a block schematic diagram of another optical amplifier for WDM transmission, and
Figure 5 is a graph showing the relation between amplification gain and wavelength for the light output from CPL 20 shown in Figure 4.

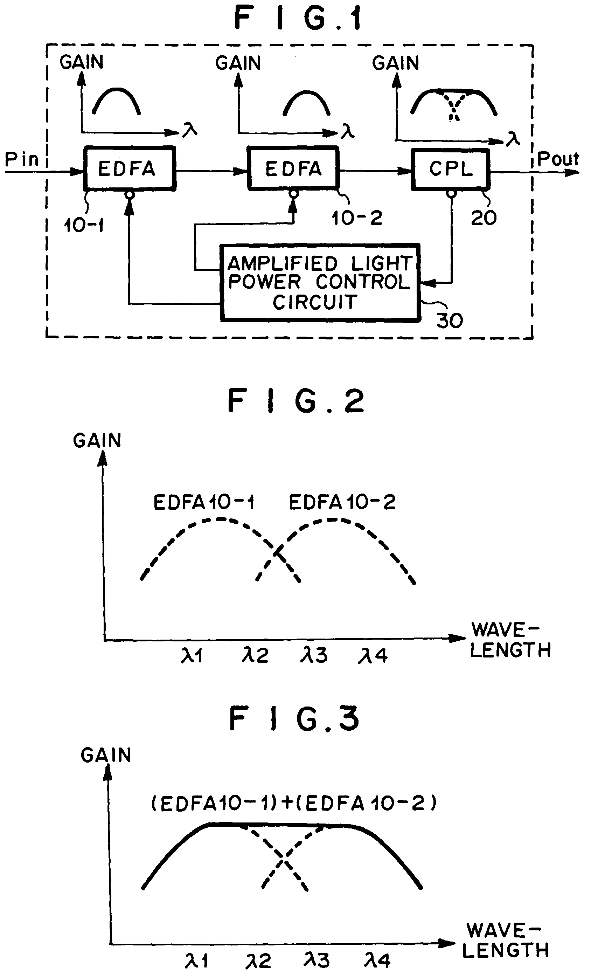

Referring to the drawings, there is shown in Figure 1, an optical amplifier which includes a first amplifier EDFA 10-1, which amplifies input light Pin in a first amplifying range, a second amplifier EDFA 10-2, which amplifies the output from the first amplifier EDFA 10-1 in a second amplifying range, which is different from the first amplifying range, a branching means CPL 20, which branches the output from the EDFA 10-2 into two beams to provide an external output signal Pout and a feedback signal. An amplified light power control circuit 30 controls the amplified light power in both EDFA 10-1 and EDFA 10-2.

The amplifying range of EDFA 10-1 is so arranged with respect to that of EDFA 10-2, by controlling the dosage of dopant and the length of fibre, that the amplifiers each excite different wavelengths.

As shown in Figure 2, the amplifying range of EDFA 10-1 is towards the shorter wavelengths, while the amplifying range of EDFA 10-2 is towards the longer wavelengths, whereby the optical amplifier acts over a prescribed wavelength range.

In the following, the action of the above arrangement will be explained with reference to an example of WDM transmission in which four signals A (wavelength λ1 = 1545 nm), B (wavelength λ2 = 1550 nm), C (wavelength λ3 = 1555 nm), and D (wavelength λ4 = 1560 nm) are multiplexed.

When input light Pin is input, the signal in the shorter wavelength component of input light Pin is amplified by EDFA 10-1 and output from EDFA 10-1.

Here, signals A and B are amplified and output, because the amplifying range of EDFA 10-1 is so designed as to excite wavelength λ1 and wavelength λ2.

Next, the signals output from EDFA 10-1 are input into EDFA 10-2, which then amplifies the longer wavelength component of the signals output from EDFA 10-1 and outputs them

Here, signals C and D are amplified and output, because the amplifying range of EDFA 10-1 is so designed as to excite wavelength λ3 and wavelength λ4.

The signal light output from EDFA 10-2 are input into the CPL 20, which then branches it into two beams for output light Pout and feedback light.

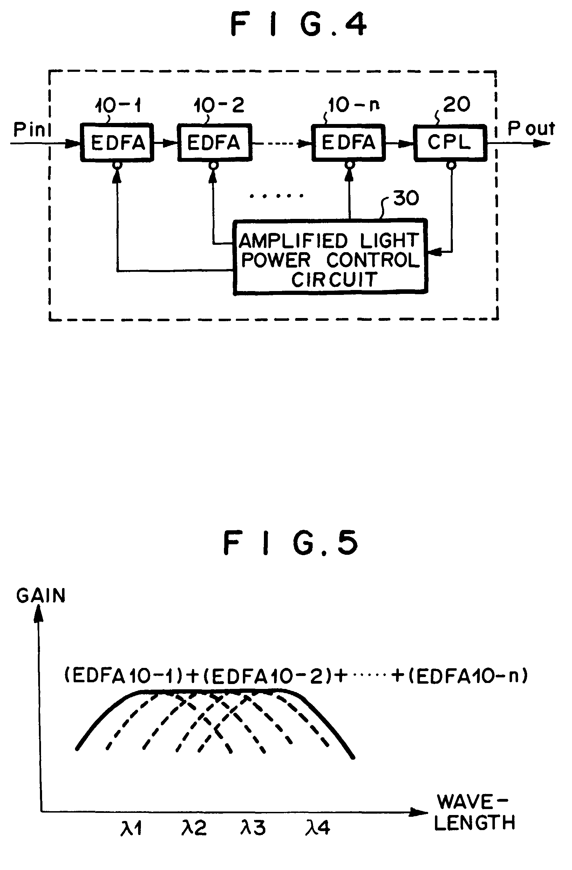

Figure 3 is a graph showing the relation between gain and wavelength for the output Pout from branching means CPL 20, as shown in Figure 1.

The signal light output from CPL 20 outputs the output light Pout which is amplified by EDFA 10-1 and EDFA 10-2 in the range from wavelength λ1 and wavelength λ4.

Therefore, it is not necessary to redesign such an optical amplifier, even when the number of channels of signal light is increased or decreased.

On the other hand the feedback signal light which is output from the CPL 20 is input into the power control circuit 30 for the amplified light which detects the signal levels in the wave-length channels of λ1, λ2, λ3, and λ4, and outputs control signals for controlling, on the basis of the detection, the light power in EDFA 10-1 and EDFA 10-2.

The control signal is such that the amplified light power is increased in EDFA 10-1, when the signal levels of A and B are too low, while the control signal is such that the amplified light power is decreased in EDFA 10-1, when the levels of signals A and B are too high. Similarly, the control signal is such that the amplified light power is increased in EDFA 10-2, when the signal levels C and D are too low, while the control signal is such that the amplified light power is decreased in EDFA 10-2, when the signals C and D are too high.

Thus, the light power levels in EDFA 10-1 and EDFA 10-2 are adjusted on the basis of the levels of the control signals output from amplified light power control circuit.

The output power Pout is stabilized by the power adjustment mentioned above, even when the power Pin of the input signal light fluctuates due to various factors such as the degradation of the laser source.

Here, the feedback gain of the amplified light power control circuit 30 is set up according to various system actual applications.

The order in which EDFA 10-1 is connected with EDFA 10-2 is irrelevant

Furthermore, the number of amplifiers EDFA is not limited to two. The above is merely an exemplary explanation.

In another arrangement which is useful in explaining the invention and is shown in Figure 4, n EDFAs are connected in series, the amplified light power levels in EDFA1O-1 to EDFA1O-n being adjusted by amplified light power control circuit 30, similarly to the arrangement of Figure 1.

As shown in Figure 5, the amplification gain is flattened over a broader wavelength range by the adoption of the plurality of EDFAs 10-1 to 10-n. Further, the output power Pout is stabilized, even when one of the EDFAs is degraded, because the other EDFAs, whose amplifying ranges overlap with that of the degraded EDFA, compensate the amplifying gain.

Furthermore, the order of connection of the EDFAs 10-1 to 10-n is irrelevant.

It will be understood that, although each amplifier in the series provides more amplificiation over a particular respective frequency range than do the other amplifiers, each amplifier passes signals at other frequencies so that a signal at a sufficient level in a frequency range, respective to each amplifier, reaches each amplifier to enable amplification over each frequency range to take place.

It will be understood that, although particular arrangements have been described by way of example in illustrating the invention, variations and modifications thereof, as well as other arrangements may be conceived within the scope of the appended claims.

## Claims

1. An optical amplifier which is suitable for wavelength division multiplexing (WDM) transmission, in which input signal light is amplified, and which includes a first amplifier for amplifying input signal light in a prescribed wave-length range, and a second amplifier for amplifying the output from the first amplifier in a wave-length range which is different from that of the first amplifier.

2. An optical amplifier which is suitable for WDM transmission as claimed in claim 1, wherein the amplifying ranges of the first and second amplifiers are arranged with respect to each other in order to amplify signal light in the prescribed range.

3. An optical amplifier which is suitable for WDM transmission as claimed in claim 1, including means for branching light which is output from the second amplifier into two beams, and means for controlling the light power in the first and second amplifiers on the basis of the power of the signal light which is output from the branching means.

4. An optical amplifier which is suitable for wavelength division multiplication multiplexing (WDM) transmission, in which input signal light is amplified, which includes a cascade connection of a plurality of amplifiers with different amplifying ranges.

5. An optical amplifier which is suitable for WDM transmission as claimed in claim 4, wherein the amplifying range of each amplifier is arranged with respect to that of the other in order to amplify signal light in a prescribed range.

6. An optical amplifier which is suitable for WDM transmission as claimed in claim 4, which includes means for branching the output from the final stage of the cascade connection into two beams, and means for controlling the light power in each of the amplifiers on the basis of the power of the signal light output from the branching means.
